Europäisches Patentamt

European Patent Office

Office européen des brevets

(19)

(11) Numéro de publication: **0 028 857**
**B1**

(12) **FASCICULE DE BREVET EUROPEEN**

(45) Date de publication du fascicule du brevet: **23.03.83**

(51) Int. Cl.³: **H 04 B 3/23, H 04 L 1/20**

(21) Numéro de dépôt: **80201034.8**

(22) Date de dépôt: **31.10.80**

(54) **Dispositif de détection de porteuse dans un modem muni d'un annuleur d'écho.**

(30) Priorité: **07.11.79 FR 7927479**

(43) Date de publication de la demande:
**20.05.81 Bulletin 81/20**

(45) Mention de la délivrance du brevet:
**23.03.83 Bulletin 83/12**

(84) Etats contractants désignés:
**CH DE FR GB IT LI NL SE**

(56) Documents cités:
**DE - B - 2 442 822**
**US - A - 3 783 194**
**US - A - 4 009 356**

(73) Titulaire: **TELECOMMUNICATIONS RADIOELECTRIQUES ET TELEPHONIQUES T. R. T.**
**88, rue Brillat Savarin**
**F-75013 Paris (FR)**

(72) Inventeur: **Guidoux, Loic Bernard Yves**
**SOCIETE CIVILE S.P.I.D. 209, rue de l'Université**
**F-75007 Paris (FR)**

(74) Mandataire: **Tissot, Jean et al,**
**Société Civile S.P.I.D. 209, rue de l'Université**
**F-75007 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Dispositif de détection de porteuse dans un modem muni d'un annuleur d'écho

L'invention concerne un dispositif de détection de porteuse dans un modem muni d'un annuleur d'écho, ce modem comportant un premier circuit de détection travaillant sur un signal de niveau du signal de sortie de l'annuleur d'écho.

Ce dispositif de détection de porteuse accompagne généralement le récepteur dans un modem utilisant pour la transmission de données la modulation d'une porteuse. Il sert par exemple, au cours de certaines procédures, à indiquer si le modem de l'autre extrémité émet ou non une porteuse, de façon à ne valider les données restituées par le récepteur que si une porteuse est émise.

Un circuit de détection de porteuse connu est constitué simplement par un circuit à seuil travaillant sur un signal de niveau de la porteuse reçue pour indiquer que cette porteuse reçue est présente ou non.

Il se pose toutefois un problème particulier de détection de porteuse dans un modem comportant un annuleur d'écho autoadaptatif pour annuler automatiquement les signaux d'échos pouvant parvenir au récepteur. Un annuleur d'écho pour la transmission de données est décrit par exemple dans le brevet français n° 2 377 734 déposé au nom de la demanderesse. Avec des modems munis d'annuleur d'écho, on peut transmettre des données simultanément dans les deux sens de transmission, sur une seule ligne de transmission.

Dans un modem muni d'annuleur d'écho, il est clair que l'on doit installer le dispositif de détection de porteuse après la sortie de l'annuleur d'écho pour ne détecter que la porteuse provenant de l'autre extrémité de la liaison, car, pendant une transmission simultanée dans les deux sens, il subsiste en pratique à la sortie de l'annuleur d'écho un signal d'écho résiduel dont le niveau $E_r$ est lié au niveau S de la porteuse reçue provenant de l'autre extrémité, suivant la formule:

$$\frac{E_r}{S} = \sqrt{\frac{\alpha N}{2 - \alpha N}}$$

Dans cette formule qui est démontrée dans un article de Mueller paru dans IEEE Transactions, Vol. COM-24, n° 9, Sept. 1976, pages 956—962, N est le nombre de coefficients du filtre de l'annuleur d'écho, et $\alpha$ est un coefficient constant, faible vis à vis de 1, qui détermine la grandeur de l'incrément de modification de ces coefficients de filtre.

En pratique $\alpha N$ est faible vis à vis de 2 et la formule ci-dessus peut être remplacée par la formule approchée:

$$\frac{E_r}{S} = \sqrt{\frac{\alpha N}{2}}$$

Pour réduire le rapport

$$\frac{E_r}{S},$$

on peut diminuer le coefficient $a$, mais on est limité dans cette voie par l'augmentation du temps de convergence de l'annuleur d'écho qui en résulte. En pratique, on choisit un coefficient $a$ procurant d'une part un temps de convergence raisonnable et d'autre part un rapport

$$\frac{E_r}{S},$$

tel que le récepteur puisse discerner facilement les données transmises par la porteuse de niveau S, en présence du signal d'écho résiduel de niveau $E_r$. Finalement, pour un modem donné, le signal d'écho résiduel a un niveau $E_r$ qui a un écart donné de —K dB, par exemple —20 dB, avec le niveau S de la porteuse.

En ce qui concerne le dispositif de détection de porteuse envisagé, on doit noter qu'après une coupure de la porteuse le signal à la sortie de l'annuleur d'écho ne s'annule pas immédiatement à cause du temps de convergence de l'annuleur d'écho. Il peut s'écouler un temps de plusieurs secondes avant cette annulation. Le signal à la sortie de l'annuleur d'écho qui existe après la coupure de la porteuse a d'abord le niveau $E_r$ du signal d'écho résiduel qui a un écart de —K dB avec le niveau S de la porteuse avant la coupure.

D'autre part, le milieu de transmission par lequel s'effectue la liaison entre deux modems présente une atténuation qui n'est pas connue, notamment si la liaison s'effectue par le réseau général commuté; cette atténuation peut varier entre 0 dB et une valeur maximale de A dB, égale par exemple à 48 dB. Il en résulte que, par rapport au niveau de la porteuse émise pris comme référence, le niveau S de la porteuse reçue varie dans la gamme de 0 dB à —A dB. Par rapport au même niveau de référence, le niveau $E_r$ du signal résiduel après la coupure de la porteuse varie dans la gamme de —K dB à —(A+K)dB. Il est clair que le niveau du signal résiduel après une coupure d'une porteuse de niveau élevé peut être supérieur au niveau d'une porteuse de niveau faible et que le circuit de détection connu qui travaille sur le signal de niveau du signal de sortie de l'annuleur d'écho, risque de ne pas détecter une coupure de porteuse.

Pour que le circuit de détection connu détecte une coupure de porteuse, il faut évidemment que le niveau $E_r$ du signal d'écho résiduel qui vaut S —K dB, soit inférieur au plus petit niveau de porteuse, soit —A dB. Cette condition peut s'écrire:

$$S < (-A+K)dB.$$

Autrement dit, le circuit de détection de porteuse connu, ne peut détecter une coupure de la porteuse, que dans la gamme des niveaux faibles de cette porteuse allant de son niveau mimimal —A dB jusqu'au niveau (—A+K)dB, soit de —48 dB à —28 dB dans l'exemple où A=48 dB et —K = —20 dB. Dans la gamme des niveaux de porteuse plus élevée allant jusqu'au niveau maximal 0 dB, le circuit de détection de porteuse connu ne peut pas détecter la coupure de la porteuse.

La présente invention vise donc à fournir un dispositif de détection de porteuse fonctionnant dans la gamme complète des niveaux de porteuse reçue en associant au circuit connu un deuxième circuit de détection pour les niveaux élevés de porteuse.

Conformément à l'invention, un dispositif de détection de porteuse, comportant un premier circuit de détection de niveau connecté à la sortie de l'annuleur d'écho, comporte un deuxième circuit de détection de niveau connecté à la sortie d'un régulateur d'amplitude connecté à la sortie de l'annuleur d'écho, ce deuxième circuit de détection comportant une bascule avec hystérésis ayant deux seuils situés de part et d'autre de la valeur de régime du niveau du signal de sortie du régulation d'amplitude avec des écarts déterminés par rapport à cette valeur de régime, cette bascule basculant dans un premier état correspondant à l'information de coupure de la porteuse quand le niveau du signal de sortie du regulateur d'amplitude descend au-dessous du seuil bas et dans un deuxième état quand le niveau du signal de sortie du régulateur d'amplitude monte au-dessus du seuil haut ou quand le premier circuit de détection donne l'information de coupure de porteuse, l'information de coupure de porteuse étant fournie par le premier ou par le deuxième circuit de détection.

Dans certaines circonstances et après une interruption brève et intempestive de la porteuse le dispositif de détection peut rester bloqué en indiquant la coupure de la porteuse.

Pour éviter ce blocage, il est avantageux que le dispositif de l'invention comporte des moyens pour limiter à une valeur déterminée la durée pendant laquelle la bascule est dans le premier état.

La description suivante en regard des dessins annexés, le tout donné à titre d'exemple, fera bien comprendre comment l'invention peut être réalisée.

La figure 1 représente un schéma du dispositif de détection de porteuse de l'invention.

La figure 2 est un diagramme montrant le niveau du signal à la sortie de l'annuleur d'écho, avant et après une coupure de la porteuse.

Les figures 3, 4 et 5 représentent des diagrammes qui illustrent dans plusieurs circonstances le fonctionnement du dispositif de la figure 1.

La figure 6 représente un schéma du dispositif de l'invention qui est un perfectionnement du dispositif de la figure 1.

La figure 7 représente des diagrammes illustrant le fonctionnement du dispositif de la figure 6.

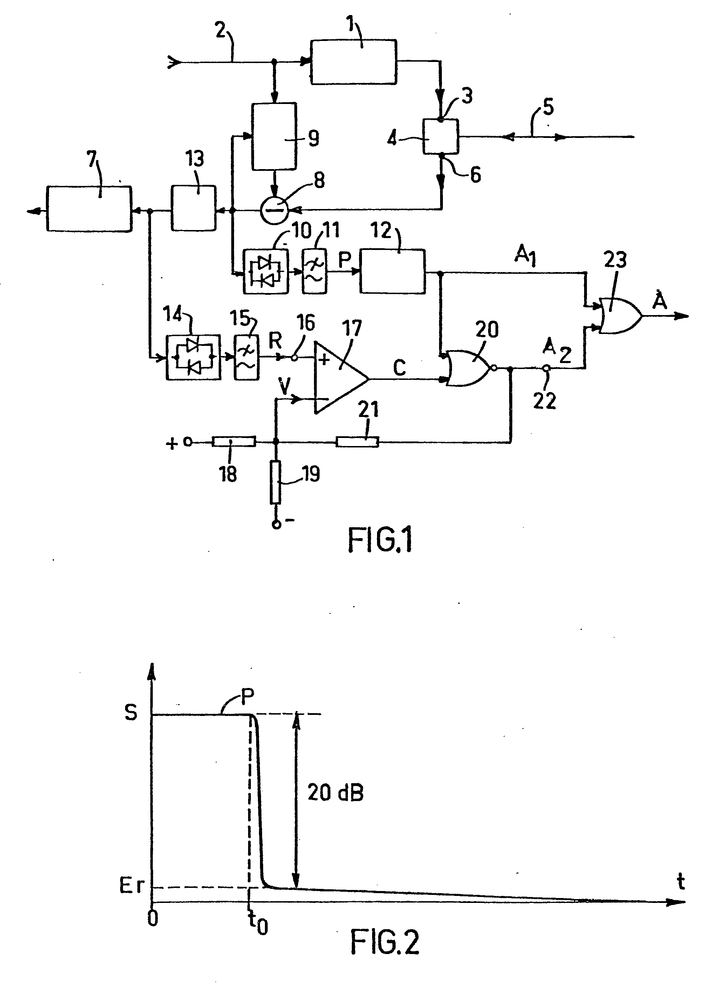

La figure 1 représente le schéma du dispositif de détection de porteuse de l'invention associé à un modem fonctionnant par modulation de porteuse et muni d'un annuleur d'écho.

Ce modem comporte un émetteur 1 recevant les données à transmettre via la connexion 2 et fournissant une porteuse modulée par les données à l'accès émission 3 de la jonction hybride 4. L'accès deux fils de cette jonction hybride est connecté à la ligne de transmission 5. La porteuse modulée provenant d'un autre modem non représenté, connecté à l'autre extrémité de la ligne de transmission 5, apparaît sur l'accès réception 6 de la jonction hybride 4 et doit être appliquée au récepteur 7 du modem représenté sur la figure.

Pour éviter l'apparition à l'entrée du récepteur 7 de signaux d'échos intempestifs provenant d'imperfections de la jonction hybride 4 et/ou de discontinuités dans la ligne de transmission 5, le modem est muni d'un annuleur d'écho automatique qui comprend un circuit de différence 8 qui reçoit d'une part le signal apparaissant sur l'accès réception 6 de la jonction hybride 4 et d'autre part un signal de copie d'écho fourni par un filtre adaptatif 9. Dans l'exemple représenté ce filtre adaptatif 9 reçoit le signal de données fourni à l'émetteur 1 et ses coefficients sont commandés par le signal de sortie du circuit de différence 8. Un annuleur d'écho de ce genre est décrit dans le brevet français précité n° 2 377 734.

Le dispositif de détection de porteuse envisagé a pour but de détecter si le modem reçoit ou non une porteuse en provenance de l'autre extrémité de la ligne de transmission 5.

Un circuit de détection de porteuse connu comporte un circuit qui forme un signal P de niveau et qui, dans le modem envisagé, est connecté à la sortie du circuit de différence 8 pour éviter théoriquement toute influence intempestive de signal d'écho. Ce circuit formant le signal P de niveau est constitué par le circuit de redressement à double alternance 10 suivi du filtre passe-bas 11. A la sortie du filtre 11 est connecté un circuit à seuil 12 qui, par comparaison du signal P de niveau avec un seuil, peut indiquer si la porteuse reçue est présente ou non.

Mais, comme on l'a déjà expliqué, ce simple circuit de détection du niveau du signal à la sortie de l'annuleur d'écho ne fonctionne pas dans la gamme complète des niveaux possibles de la porteuse reçue. On utilise par la suite l'exemple déjà cité où l'affaiblissement de la ligne de transmission 5 peut varier entre 0 et A=48 dB de sorte que, par rapport au niveau de la porteuse émise pris comme référence, le niveau S de la porteuse reçue peut varier entre 0 dB et −48 dB. D'autre part, on suppose aussi que, par rapport au niveau S, le niveau $E_r$ du signal d'écho résiduel est −K = −20 dB.

Le diagramme de la figure 2 représente le signal P qui est appliqué au circuit à seuil 12, avant et après l'instant to de coupure de la porteuse à l'autre extrémité de la ligne de transmission 5. Avant l'instant to, le signal P a le niveau S de la porteuse reçue, en négligeant le signal d'écho résiduel qui est superposé à cette porteuse reçue. Après l'instant to, le signal P prend rapidement la valeur du niveau $E_r$ du signal d'écho résiduel, c'est-à-dire qu'il est à 20 dB au-dessous du niveau S. Le signal P décroit ensuite progressivement jusqu'à s'annuler après une durée dépendant du temps de convergence de l'annuleur d'écho. La durée maximale d'annulation du signal P après l'instant to, est par exemple $\tau$=5 S.

Si le seuil du circuit 12 détectant la coupure de la porteuse est réglé au niveau minimum −48 dB de la porteuse reçue, le signal P, peu après l'instant to de coupure de la porteuse, ne descend au-dessous de ce seuil que pour les niveaux faibles de porteuse reçue allant de −48 dB à −28 dB, alors qu'il se trouve au-dessus de ce seuil pour les niveaux de porteuse reçue plus élevés que −28 dB. Autrement dit, le circuit de détection de porteuse connu 10, 11, 12 ne fonctionne plus correctement dans la gamme des niveaux élevés de porteuse reçue allant de −28 dB à 0 dB.

Pour pallier cette difficulté, le dispositif de détection de porteuse de l'invention utilise un deuxième circuit de détection de porteuse associé au circuit connu. Selon l'invention, ce deuxième circuit de détection de porteuse travaille à partir du signal fourni par un régulateur d'amplitude 13 connecté à la sortie du circuit de différence 8 de l'annuleur d'écho. Un régulateur d'amplitude qui est un circuit bien connu de l'homme de l'art comporte essentiellement un amplificateur avec une boucle de commande automatique de gain (CAG) pour fournir un signal d'amplitude constante. On doit noter qu'un régulateur d'amplitude 13 est souvent déjà incorporé dans les modems travaillant par modulation de phase ou de fréquence pour faire travailler le récepteur 7 avec une porteuse d'amplitude constante. A la sortie du régulateur d'amplitude 13 est connecté un circuit de redressement à double alternance 14 suivi du filtre pass-bas 15 qui fournit le signal R égal au niveau du signal de sortie du régulateur d'amplitude. En dehors de périodes transitoires le signal R a donc une valeur de régime Ro constante.

Le signal R est appliqué à l'entrée 16 d'une bascule avec hystérésis ayant un seuil bas B et un seuil haut H situés de part et d'autre de la valeur de régime Ro du signal R avec des écarts déterminés par rapport à cette valeur de régime Ro. Cette bascule avec hystérésis est constituée par un circuit comparateur 17 dont l'entrée non inverseuse reçoit le signal R via la borne 16 et dont l'entrée inverseuse reçoit le signal de seuil V pouvant prendre la valeur du seuil bas B ou la valeur du seuil haut H. Ce signal de seuil V est obtenu sur la borne commune des deux résistances 18 et 19 alimentée en série par les deux bornes positive et négative d'une source d'alimentation. Cette borne commune entre 18 et 19 est également connectée à la sortie d'un circuit NON-OU 20 à travers la résistance 21. Une entrée de ce circuit NON-OU 20 est reliée à la sortie du circuit comparateur 17 et son autre entrée est reliée à la sortie du circuit à seuil 12 formant la sortie du circuit de détection connu. La sortie du circuit NON-OU 20 forme la borne de sortie 22 de la bascule avec hystérésis. Les seuils bas et haut de cette bascule peuvent se régler au moyen des résistances 18, 19 et 21.

Il est aisé d'établir le fonctionnement de cette bascule. On suppose que le signal logique "0" correspond à un niveau faible de tension et que le signal logique "1" correspond à un niveau haut de tension. Par ailleurs on adopte la convention qu'un signal logique "0" à la sortie du premier circuit de détection (sortie du circuit 12) ou à la sortie du deuxième circuit de détection (sortie 22 de la bascule) signifie que la porteuse est présente tandis qu'un signal logique "1" y signifie que la porteuse est absente.

On se place d'abord dans le cas où le signal logique $A_1$ à la sortie du circuit 12 vaut "0". Si le signal logique C à la sortie du circuit comparateur 17 vaut "1", le signal logique $A_2$ à la sortie 22 de la bascule vaut "0" et le signal de seuil V de la bascule est à l'état du seuil bas B, le signal R étant plus grand que ce seuil bas. Si le signal R décroît et descend au-dessous de ce seuil bas, le signal $A_2$ à la sortie 22 de la bascule prend l'état "1" et le signal de seuil V de la bascule prend l'état du seuil halt H. Si alors le signal R croît et monte au-dessus de ce seuil haut, le signal $A_2$ reprend l'état "0" et le seuil bas B est rétabli. Par contre, dans le cas où le signal $A_1$ à la sortie du circuit 12 vaut "1", le signal $A_2$ à la sortie 22 de la bascule vaut "0" et n'est pas influencé par le signal R.

Avec les conventions adoptées, le signal de sortie A du dispositif de détection de porteuse de l'invention est obtenu à la sortie du circuit OU 23 qui reçoit sur une entrée le signal $A_1$ du premier circuit de détection et sur son autre entrée le signal $A_2$ du deuxième circuit de détection.

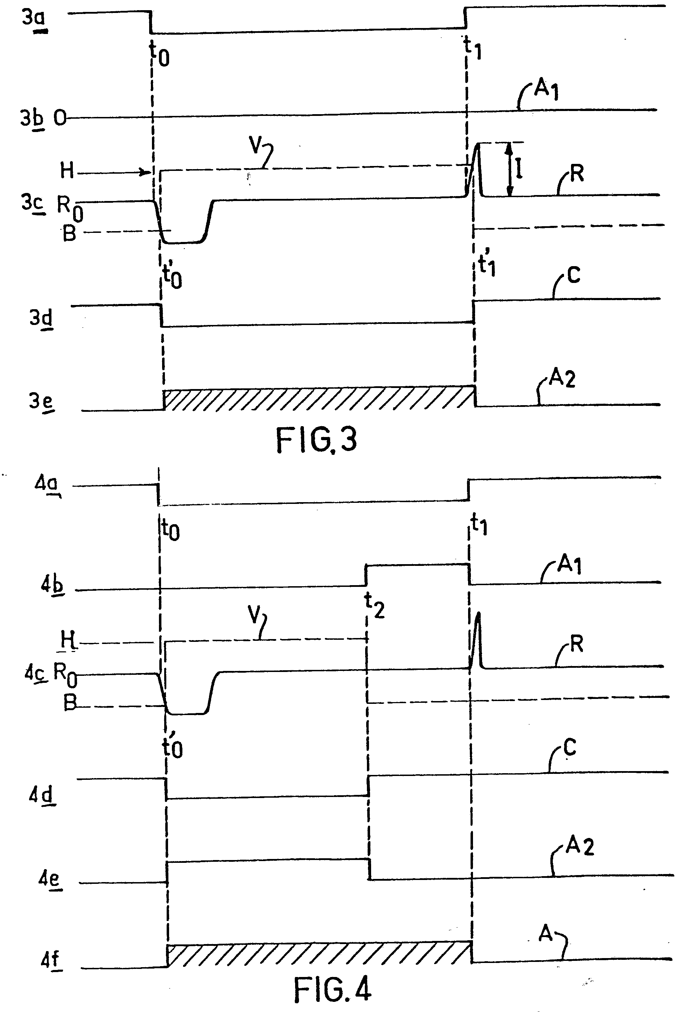

Le fonctionnement du dispositif de détection de l'invention va être expliqué dans différentes circonstances à l'aide des diagrammes des figures 3, 4 et 5, qui représentent divers signaux en fonction du temps.

La figure 3 correspond au cas où la porteuse reçue a un niveau élevé. Comme le montre schématiquement le diagramme 3a, la porteuse émise est coupée dans l'intervalle de temps allant de to à t₁ et présente le reste du temps. On suppose que pendant cet intervalle de temps [to, t₁], le premier circuit de détection 10, 11, 12 ne détecte pas la coupure de la porteuse de sorte que le signal logique $A_1$ à la sortie du circuit 12 reste à l'état "0" (voir diagramme 3b).

Le diagramme 3c montre le signal R représentant le niveau du signal à la sortie du régulateur d'amplitude 13. En dehors de durées transitoires suivant les instants to et t₁ de coupure et de rétablissement de la porteuse, ce signal R a une valeur de régime Ro. A la suite de l'instant to de coupure de la porteuse, le signal R descend d'abord de 20 dB au-dessous de Ro pour prendre le niveau du signal d'écho résiduel, car le régulateur d'amplitude 13 possède nécessairement une certaine constante de temps, plus grande que celle du filtre passe-bas 15 fournissant le signal R. Pendant un court laps de temps le signal R garde sensiblement la valeur Ro —20 dB, puis, quand le régulateur d'amplitude 13 à réagi à la baisse de signal à son entrée, le signal R reprend sa valeur de régime Ro. Il est important de noter que, quel que soit le niveau de la porteuse reçue, on observe toujours à la coupure de la porteuse une chute de 20 dB du signal R.

Comme le montre également le diagramme 3c, à la suite de l'instant t₁ de rétablissement de la porteuse, le signal R présente une impulsion brève transitoire au-dessus de la valeur de régime Ro. Cette impulsion est due encore à la constante de temps du circuit régulateur d'amplitude 13, mais si l'on considère qu'au temps t₁, le signal d'écho résiduel est annulé, l'amplitude I de cette impulsion est sensiblement égale au niveau de la porteuse rétablie. Cette amplitude I varie donc comme le niveau de la porteuse et, dans le cas illustré sur la figure 3, cette amplitude est relativement élevée, comme le niveau de la porteuse.

Avant l'instant to de coupure de la porteuse, on voit sur le diagramme 3d que le signal de sortie C du comparateur 17 est à l'état "1". Il en résulte que le signal $A_2$ à la sortie 22 de la bascule est à l'état "0" comme le montre le diagramme 3e. Le signal de seuil V représenté par la courbe en pointillé sur le diagramme 3c, montre qu'en même temps le seuil bas B est établi à l'entrée inverseuse du circuit comparateur 17.

A la suite de l'instant to de coupure de la porteuse, le signal R chute de 20 dB et descend au-dessous du seuil bas B. A l'instant t'o de franchissement de ce seuil, qui est très proche de to, le signal C passe à l'état "0", le signal $A_2$ passe à l'état "1", ce qui signifie une détection de la coupure de la porteuse à la sortie 22 du deuxième circuit de détection, coupure qui n'a pas été détectée par le premier circuit de détection. En même temps comme le montre la courbe V sur le diagramme 3c, le seuil haut H s'établit sur l'entrée inverseuse du comparateur 17. Comme le montre le diagramme 3c, durant l'impulsion d'amplitude I qui se produit juste après l'instant t₁ de rétablissement de la porteuse, le signal R franchit le seuil haut H. A l'instant t'₁ de franchissement de ce seuil, qui est très proche de t₁, le signal C passe à l'état "1", le signal $A_2$ passe à l'état "0", ce qui signifie une détection du rétablissement de la porteuse. En même temps, le seuil bas B se rétablit sur l'entrée inverseuse du comparateur 17.

L'intervalle de temps pendant lequel le dispositif de détection complet indique une coupure de la porteuse est l'intervalle pendant lequel le signal de sortie A du circuit OU 23 vaut "1". Cet intervalle représenté par la zone hachurée sur le diagramme 3e, coïncide avec l'intervalle où le signal $A_2$ de sortie de la bascule vaut "1".

Le cas illustré par la figure 4 diffère de celui illustré par la figure 3, par le fait que pendant l'intervalle de temps [to, t₁] de coupure de la porteuse, le premier circuit de détection détecte cette coupure, toutefois avec un certain retard. Les diagrammes 4a à 4e représentent les mêmes signaux que les diagrammes 3a à 3e. Jusqu'à l'instant t₂ où le signal $A_1$ prend l'état "1", ce qui signifie que le premier circuit de détection détecte une coupure de la porteuse, les signaux $A_1$, V, R, C, $A_2$ représentés sur la figure 4 sont identiques à ceux représentés sur la figure 3. A l'instant t₂, quand le signal $A_1$ prend l'état "1", on a d'abord le passage du signal $A_2$ à l'état "0" ce qui entraîne quasiment immédiatement l'établissement du seuil bas B sur l'entrée inverseuse du circuit comparateur 17 et le passage du signal C à l'état "1". A l'instant t₁ où la porteuse est rétablie, ce rétablissement est détecté par le premier circuit de détection dont le signal de sortie $A_1$ passe à l'état "0". On voit que, dans le cas envisagé sur la figure 4 l'impulsion du signal R qui suit l'instant t₁ n'est pas utilisée pour la détection du rétablissement de la porteuse. L'intervalle de temps pendant lequel le dispositif de détection complet indique une coupure de la porteuse est représenté par la zone hachurée sur le diagramme 4f. Dans cet intervalle, soit le signal $A_1$ de sortie du premier circuit de détection, soit le signal $A_2$ de sortie du deuxième circuit de détection vaut "1".

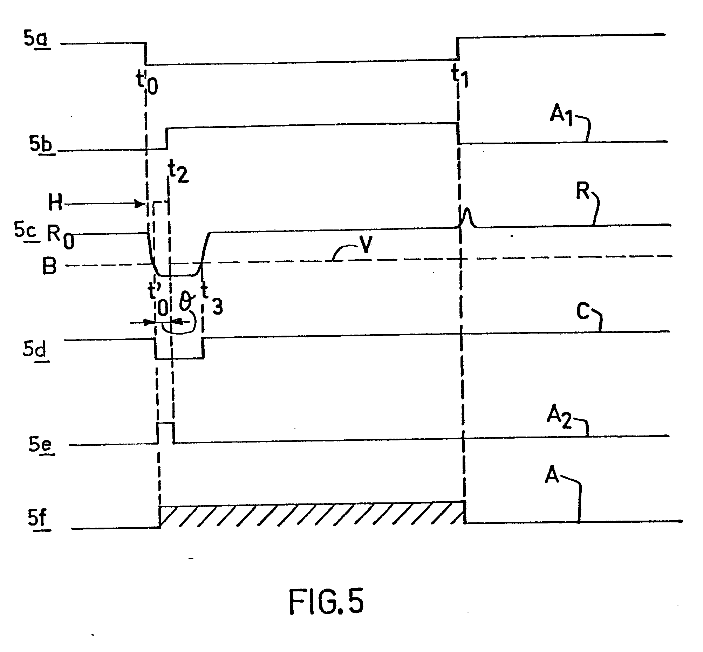

Le cas illustré par la figure 5 diffère de celui illustré par les figures 3 et 4 par le fait que la porteuse reçue a un niveau faible, par exemple proche du niveau minimum de —48 dB. Dans ce cas le premier circuit de détection est capable de détecter correctement la coupure et le rétablissement de la porteuse tandis que le deuxième circuit de détection n'est capable de détecter que la coupure de la porteuse. On suppose par exemple que la détection de la coupure par le premier circuit de détection est effectuée avec un faible retard $\theta$ par rapport à la détection de la coupure par le deuxième circuit de détection. Comme le montre le diagramme 5c, dans le cas envisagé le signal R présente toujours une baisse transitoire de 20 dB à la suite de l'instant de coupure to, mais par contre l'impulsion suivant l'instant de rétablissement t₁ a presque disparu et son amplitude I est très largement au-dessous du seuil haut H. A l'instant t'o où le signal R décroissant franchit le seuil bas B, le signal C passe à l'état "0", le signal A₂ passe à l'état "1" tandis que le signal de seuil V passe à l'état du seuil haut H. A l'instant $t_2 = t'o + \theta$ où le signal A₁ passe à l'état "1", le signal A₂ revient à l'état "0" tandis que le signal de seuil V reprend l'état de seuil bas B. A l'instant t₃ le signal R croissant franchit ce seuil bas et il en résulte que le signal C revient à l'état "1". Le rétablissement de la porteuse à l'instant t₁ est indiqué par le passage du signal A₁ à l'état "0". La zone hachurée représentée sur le diagramme 5f représente l'intervalle de temps où le dispositif de détection complet indique la coupure de la porteuse.

Dans l'exemple déjà cité on a vu que le premier circuit de détection fournissant le signal A₁ peut détecter correctement à la fois la coupure et le rétablissement de la porteuse dans la gamme des niveaux faibles de porteuse allant de —48 dB à —28 dB. Le deuxième circuit de détection fournissant le signal A₂ doit prendre le relais du premier circuit pour la gamme des signaux élevés de porteuse allant jusqu'à 0 dBm. Il est clair que l'on doit assurer un large recouvrement entre les gammes d'action des deux circuits de détection. La détection de la coupure de la porteuse ne pose aucun problème pour ce recouvrement, car le deuxième circuit de détection est capable d'indiquer toujours cette coupure quel que soit le niveau de la porteuse. Pour assurer ce recouvrement en ce qui concerne la détection du rétablissement de la porteuse, il suffit de régler le seuil haut H du signal de seuil V de façon que ce seuil soit atteint par l'impulsion du signal R suivant l'instant t₁ de rétablissement de la porteuse, lorsque le niveau de la porteuse rétablie est nettement inférieur à —28 dB et vaut par exemple —33 dB. Dans la zone des niveaux de porteuse allant de —28 dB à —33 dB, on a alors un recouvrement entre les gammes d'action des deux circuits de détection.

Le dispositif de détection de porteuse de la figure 1 décrit jusqu'à présent peut toutefois encore se trouver en défaut dans certaines circonstances en cas d'interruptions brèves et intempestives de la porteuse reçue, dues par exemple à des incidents sur la ligne de transmission. En effet, si l'interruption de la porteuse est brève et si en même temps le niveau de la porteuse est faible, il peut se produire d'une part que le premier circuit de détection ne détecte pas la coupure de la porteuse (le signal A₁ reste à l'état "0") et d'autre part que le deuxième circuit de détection ayant détecté la coupure, ne détecte pas le rétablissement (le signal A₂ reste à l'état "1"), car l'impulsion suivant l'instant de ce rétablissement a un niveau trop faible. Le dispositif de détection indique alors intempestivement que la porteuse est coupée (le signal de sortie A est à l'état "1") et reste bloqué dans cette position.

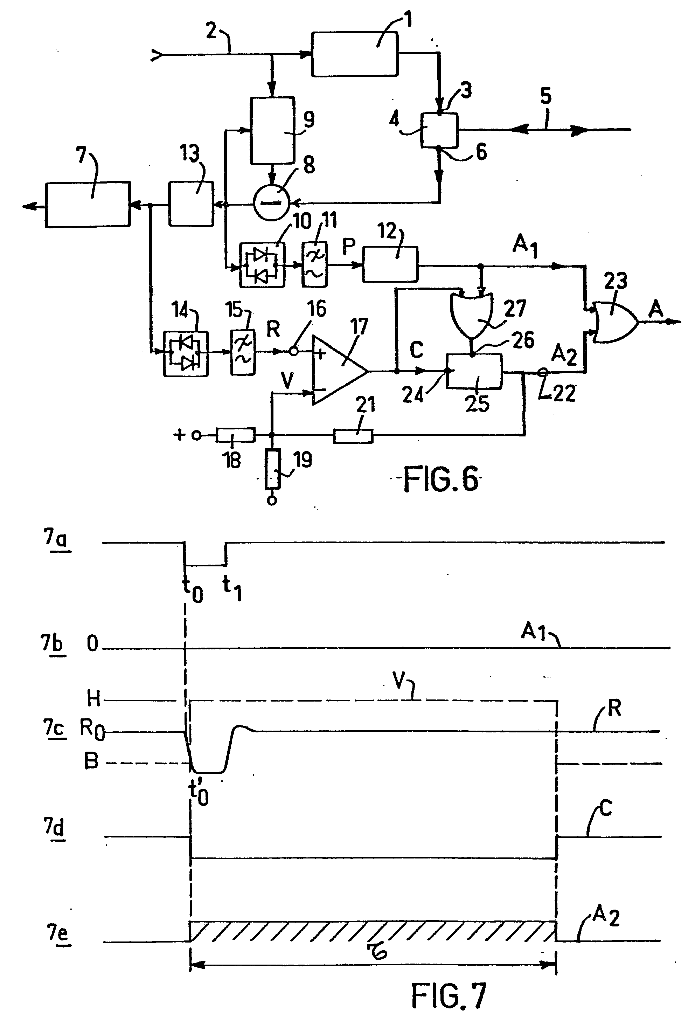

Un perfectionnement du dispositif de l'invention représenté sur la figure 6 permet d'éviter cet inconvénient. La plupart des éléments des figures 1 et 6 sont identiques et référencés de la même manière. Mais sur la figure 6, la sortie du circuit comparateur 17 est reliés à l'entrée d'excitation 24 d'un circuit monostable 25 dont la sortie constitue la borne de sortie 22 de la bascule avec hystérésis, ou du deuxième circuit de détection. Ce monostable est agencé pour fournir, à partir d'un front descendant du signal C à son entrée, un signal logique "1" pendant une durée au moins égale à la durée τ maximale d'annulation du signal à la sortie de l'annuleur d'écho après une coupure de la porteuse. Le monostable 25 comporte également une borne 26 de remise à zéro qui est connectée à la sortie du circuit OU 27 ayant ses deux entrées connectées respectivement à la sortie du circuit comparateur 17 et à la sortie du circuit à seuil 12. De cette manière, pendant la durée d'excitation du monostable 25, ayant par exemple la valeur τ = 5 S, son signal de sortie être ramené à l'état "0" lorsque l'un ou l'autre des signaux C et A₁ prend l'état "1".

Les diagrammes de la figure 7 illustrent le fonctionnement du dispositif de la figure 6, dans le cas décrit ci-dessus où le dispositif de la figure 1 est en défaut. Le diagramme 7a montre une interruption de brève durée de la porteuse entre les instants to et t₁. La coupure de la porteuse n'est pas détectée par le premier circuit de détection dont le signal de sortie A₁ reste à l'état "0". Le signal R appliqué à la bascule du deuxième circuit de détection présente une chute de 20 dB après l'instant to de coupure de la porteuse, mais pratiquement pas d'impulsion après l'instant t₁ de rétablissement de la porteuse. A l'instant t'o où le signal R franchit le seuil bas B, le signal C passe à l'état "0" ce qui déclenche le monostable 25 dont le signal de sortie A₂ passe à l'état "1"; en même temps le signal de seuil V prend l'état de seuil haut H. Au contraire du dispositif de la figure 1 qui resterait bloqué dans cette position après l'instant t₁ de rétablissement de la porteuse, on obtient, à la fin de la durée d'excitation τ du monostable 24, un déblocage du dispositif, car alors le signal A₂ revient à l'état "0", ce qui établit le seuil bas B et l'état "1" du signal logique C.

Il serait aisé de vérifier le bon fonctionnement du dispositif de la figure 6 dans les circonstances normales évoquées pour le dispositif de la figure 1. Le monostable 25 qui est excité dans tous les cas lorsque survient une coupure de la porteuse peut être remis à zéro avant la fin de la durée normale d'excitation τ, par le signal C passant à l'état "1" ce qui entraîne que le rétablissement de la porteuse est détecté par le deuxième circuit de détection. Le fonctionnement est alors analogue à celui illustré sur la figure 3. Lorsque la durée de coupure de la porteuse est supérieure à la durée d'excitation normale $\tau$ du monostable 25, ce dernier est aussi remis à zéro avant la fin de cette durée $\tau$, par le signal $A_1$ passant à l'état "1" lorsque le premier circuit de détection détecte la coupure de la porteuse; le fonctionnement est alors analogue à celui illustré sur la figure 4.

## Revendications

1. Dispositif de détection de porteuse dans un modem muni d'un annuleur d'écho, ce dispositif de détection comportant un premier circuit (10, 12) de détection de niveau connecté à la sortie de l'annuleur d'écho (8, 9), caractérisé en ce qu'il comporte un deuxième circuit (14, 21) de détection de niveau connecté à la sortie d'un régulateur d'amplitude (13) connecté à la sortie de l'annuleur d'écho (8, 9), ce deuxième circuit de détection comportant une bascule (17, 21) avec hystérésis ayant deux seuils (B, H) situés de part et d'autre de la valeur de régime (Ro) du niveau du signal de sortie du régulateur d'amplitude avec des écarts déterminés par rapport à cette valeur de régime, cette bascule basculant dans un premier état correspondant à l'information de coupure de la porteuse quand le niveau du signal de sortie du régulateur d'amplitude descend au-dessous du seuil bas (B) et dans un deuxième état quand le niveau du signal de sortie du régulateur d'amplitude monte au-dessus du seuil haut (H) ou quand le premier circuit de détection donne (en $A_1$) l'information de coupure de porteuse, l'information de coupure de porteuse étant fournie (en A) par le premier ou par le deuxième circuit de détection.

2. Dispositif de détection selon la revendication 1, caractérisé en ce qu'il comporte des moyens (25) pour limiter à une valeur déterminée la durée pendant laquelle la bascule est dans le premier état.

## Claims

1. A carrier detector in a modem provided with an echo canceler, this carrier detector comprising a first level detection circuit (10—12) connected to the output of the echo canceler (8, 9), characterized in that the carrier detector further comprises a second level detection circuit (14—29) connected to the output of an amplitude regulator (13) which is connected to the output of the echo canceler (8, 9), this second detection circuit including a bistable circuit (17—29) having hysteresis and having two thresholds (B, H) located one on each side of the operating value (Ro) of the level of the output signal of the amplitude regulator with predetermined deviations with respect to this operating value, this bistable circuit changing to a first state corresponding to the indication of a carrier interruption when the level of the output signal of the amplitude regulator decreases to below the low threshold (B), and changing to a second state when the level of the output signal of the amplitude regulator increases to above the high threshold (H), or when the first detection circuit furnishes (at $A_1$) the indication of a carrier interruption, the indication of a carrier interruption being produced (at A) by the first or the second detection circuit.

2. A carrier detector as claimed in Claim 1, characterized in that it comprises means (25) for limiting the period of time in which the bistable circuit is in its first state to a predetermined value.

## Patentansprüche

1. Vorrichtung zur Trägererkennung in einem einen Echokompensator enthaltenden Modem, wobei diese Vorrichtung einen ersten Pegeldetektionskreis (10—12) enthält, der mit dem Ausgang des Echokompensators (8, 9) verbunden ist, dadurch gekennzeichnet, dass die Vorrichtung einen zweiten Pegeldetektionskreis (14—21) enthält, der mit dem Ausgang eines am Ausgang des Echokompensators (8, 9) angeschlossenen Amplitudenreglers (13) verbunden ist, wobei dieser zweite Detektionskreis eine bistabile Kippschaltung (17—21) mit Hysterese und mit zwei Schwellen (B, H) enthält, die auf je einer Seite des Nennwertes ($R_o$) des Ausgangssignalpegels des Amplitudenreglers liegen, mit vorbestimmten Abweichungen in bezug auf diesen Nennwert, wobei diese bistabile Kippschaltung in eine erste, der Anzeige einer Trägerunterbrechung entsprechende Lage kippt, wenn der Pegel des Ausgangssignals des Amplitudenreglers die untere Schwelle (B) unterschreitet, und in eine zweite Lage kippt, wenn der Pegel des Ausgangssignals des Amplitudenreglers die obere Schwelle (H) überschreitet, oder wenn der erste Detektionskreis (bei $A_1$) die Anzeige einer Trägerunterbrechung liefert, wobei die Anzeige einer Trägerunterbrechung (bei A) von dem ersten oder zweiten Detektionskreis erzeugt wird.

2. Vorrichtung zur Trägererkennung nach Anspruch 1, dadurch gekennzeichnet, dass sie Mittel (25) enthält zum Beschränken der Zeitperiode auf einen vorbestimmten Wert, in der die bistabile Kippschaltung sich in der ersten Lage befindet.

FIG.1

FIG.2

FIG.3

FIG.4

FIG.5

0 028 857

FIG.6

FIG.7

4